(19) **Europäisches Patentamt** / **European Patent Office** / **Office européen des brevets**

(11) **EP 4 470 712 A1**

(12) **EUROPEAN PATENT APPLICATION**
published in accordance with Art. 153(4) EPC

(43) Date of publication:
04.12.2024 Bulletin 2024/49

(21) Application number: 22924177.3

(22) Date of filing: 22.12.2022

(51) International Patent Classification (IPC):
*B23K 35/30* (2006.01)    *C22C 38/00* (2006.01)
*C22C 38/04* (2006.01)

(52) Cooperative Patent Classification (CPC):
B23K 35/30; C22C 38/00; C22C 38/04

(86) International application number:
PCT/JP2022/047289

(87) International publication number:
WO 2023/145330 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.01.2022 JP 2022010976

(71) Applicant: NIPPON STEEL CORPORATION
Chiyoda-ku
Tokyo 100-8071 (JP)

(72) Inventors:
• MATSUDA, Kazuki
  Tokyo 100-8071 (JP)
• KODAMA, Shinji
  Tokyo 100-8071 (JP)
• MATSUBA, Masahiro
  Tokyo 100-8071 (JP)
• ISHIDA, Yoshinari
  Tokyo 100-8071 (JP)

(74) Representative: Vossius & Partner
Patentanwälte Rechtsanwälte mbB
Siebertstrasse 3
81675 München (DE)

(54) **ARC WELD METAL, WELD JOINT, AND AUTOMOTIVE MEMBER**

(57) An arc weld metal according to an aspect of the present invention contains, in a unit mass%, 0.10% or more and 0.30% or less of C, 0.30% or more and 1.00% or less of Si, 1.30% or more and 3.00% or less of Mn, 0.0500% or less of P, 0.0100% or less of S, 0.01% or less of N, and 0.02% or more and 0.07% or less of O, a remainder including iron and impurities, and the residual austenite volume percentage being 3.0% or more and 16.0% or less, in a unit mass%.

[Fig. 1]

**EP 4 470 712 A1**

**Description**

[Technical Field of the Invention]

The present invention relates to an arc weld metal, a welded joint, and a vehicle member.

The present application claims priority based on Japanese Patent Application No. 2022-010976 filed in Japan on January 27, 2022, the contents of which are incorporated herein by reference.

[Related Art]

In the manufacture of a vehicle member, particularly, a suspension member, a steel sheet as a material has been thinned and high-strengthening has been progressed. This makes it possible to reduce the weight of the vehicle and improve the safety of the vehicle. Arc welding is mainly used for joining steel sheets for vehicle members.

However, it is known that hydrogen embrittlement cracks are likely to occur in a weld metal obtained by arc welding a high strength steel sheet. Therefore, in order to promote the application of the high strength steel sheet to the vehicle suspension member, measures against hydrogen embrittlement cracks are essential.

The vehicle member is also required to have corrosion resistance. Therefore, the arc weld provided at the joint portion of the vehicle member is required to have not only hydrogen embrittlement resistance but also electrodeposition coating properties.

As a prior art related to arc welding, Patent Document 1 discloses a weld metal formed by gas shielded arc welding using a flux-cored wire, in which the weld metal contains 0.02 to 0.12% of C (it means "mass%", regarding chemical composition, the same applies below), 0.10 to 2.00% of Si, 0.90 to 2.5% of Mn, 0.20 to 3.5% of Ni, 0.040 to 0.15% of Ti, 0.015% or less (not including 0%) of N, and 0.030 to 0.10% of O, the remainder includes iron and an unavoidable impurity, the number of residual austenite particles is 2500/mm$^2$ or more, the volume fraction of the residual austenite particles is 4.0% or more, and the β value represented by the following formula (1) is 75 or more, and the weld metal has excellent hydrogen embrittlement resistance sensitiveness.

$$β \text{ value} = 320 \times [C] + 50 \times [Si] + 15 \times [Mn] + 10 \times [Ni] + 28 \times [Mo] \cdots (1)$$

However, [C], [Si], [Mn], [Ni], and [Mo] mean the contents (mass%) of C, Si, Mn, Ni, and Mo, respectively.

Patent Document 2 discloses a weld metal containing 0.02 to 0.12% of C (it means "mass%", regarding chemical composition, the same applies below), 0.18 to 2.00% of Si, 0.90 to 2.5% of Mn, 1.0 to 3.5% of Ni, 0.3 to 2.0% of Cr, 0.030% or less of Al (not containing 0%), 0.015% or less of N (not containing 0%), and 0.050% or less of O (not containing 0%), in which the remainder includes iron and an unavoidable impurity, and the weld metal contains 2500/mm$^2$ or more of residual austenite particles having a circle equivalent diameter of 0.15 μm or more, the volume fraction of the residual austenite phase is 4.3% or more with respect to the entire microstructure, and the ratio of the contents of Cr and Mn, that is, [Cr]/[Mn] is 0.20 or more, and the weld metal has excellent hydrogen embrittlement resistance sensitiveness.

Patent Document 3 discloses a weld metal formed by gas shielded arc welding using a flux-cored wire, in which the weld metal contains 0.02 to 0.12% of C (it means "mass%", regarding chemical composition, the same applies below), 0.10 to 2.00% of Si, 0.90 to 2.5% of Mn, 0.20 to 3.5% of Ni, 0.040 to 0.15% of Ti, 0.015% or less (not including 0%) of N, and 0.030 to 0.10% of O, the remainder includes iron and an unavoidable impurity, the number of residual austenite particles is 2500/mm$^2$ or more, the volume fraction of the residual austenite particles is 4.0% or more, and the β value represented by the following formula (1) is 75 or more, and the weld metal has excellent hydrogen embrittlement resistance sensitiveness.

$$β \text{ value} = 320 \times [C] + 50 \times [Si] + 15 \times [Mn] + 10 \times [Ni] + 28 \times [Mo] \cdots (1)$$

However, [C], [Si], [Mn], [Ni], and [Mo] mean the amounts (mass%) of C, Si, Mn, Ni, and Mo, respectively.

Patent Document 4 discloses an arc welding method for a steel sheet having a C content of 0.08 to 0.30 mass%, in which welding is performed using a welding wire having a total amount of Cr and Ni of 1.00 mass% or more under a condition that X represented by the following formula (1) is 200 or less.

$$X = 0.8 \times (300 - 279 [C]_w - 25[Si]_w - 35[Mn]_w - 49[Ni]_w - 47[Cr]_w - 61[Mo]_w) + 0.2 \times (300 - 279[C])_{BM} - 25[Si]_{BM} - 35[Mn]_{BM} - 49[Ni]_{BM} - 47[Cr]_{BM} - 61[Mo]_{BM} \qquad (1)$$

(Here, [C]w, [Si]w, [Mn]w, [Ni]w, [Cr]w, and [Mo]w respectively represent the contents (mass%) of C, Si, Mn, Ni, Cr, and Mo in the welding wire and [C]$_{BM}$, [Si]$_{BM}$, [Mn]$_{BM}$, [Ni]$_{BM}$, [Cr]$_{BM}$, and [Mo]$_{BM}$ respectively represent the amounts (mass%) of C, Si, Mn, Ni, Cr, and Mo in the steel sheet.)

Patent Document 5 discloses a high fatigue strength fillet welded joint in which at least one of steel sheets has a sheet thickness of 1 to 4 mm, in which (a) a volume percentage of martensite in a weld metal is 50% or more, and (b) an angle of a weld toe portion formed on the steel sheet surface is 110 to 150°.

[Citation List]

[Patent Document]

[Patent Document 1]
PCT International Publication No. WO 2013/129284
[Patent Document 2]
Japanese Unexamined Patent Application, First Publication No. 2014-133258
[Patent Document 3]
Japanese Unexamined Patent Application, First Publication No. 2013-173179
[Patent Document 4]
Japanese Unexamined Patent Application, First Publication No. 2018-187640
[Patent Document 5]
Japanese Unexamined Patent Application, First Publication No. 2005-238305

[Summary of Invention]

[Problems to be Solved by the Invention]

However, in any of the inventions described in Patent Documents 1 to 5, it is not an object to improve both electrodeposition coating properties and hydrogen embrittlement resistance of a weld, and a specific constitution therefor is not disclosed.

An object of the present invention is to provide an arc weld metal capable of improving both electrodeposition coating properties and hydrogen embrittlement resistance of a weld, and a welded joint and a vehicle member excellent in both electrodeposition coating properties and hydrogen embrittlement resistance of a weld.

[Means for Solving the Problem]

The gist of the present invention is as follows.
(1) An arc weld metal according to an aspect of the present invention contains, in a unit mass%, 0.10% or more and 0.30% or less of C, 0.30% or more and 1.00% or less of Si, 1.30% or more and 3.00% or less of Mn, 0.0500% or less of P, 0.0100% or less of S, 0.0100% or less of N, 0.0200% or more and 0.0700% or less of O, and 5.00% or less in total of one or more kinds selected from the group of Al, Ti, Cu, Ni, Cr, Mo, V, B, Nb, Zr, and Mg, a remainder including iron and impurities, in which a residual austenite volume percentage being 3.0% or more and 16.0% or less.

(2) The arc weld metal according to (1) may contain one or more kinds selected from the group of Al, Ti, Cu, Ni, Cr, Mo, V, B, Nb, Zr, and Mg in a total amount of 0.03% or more and 5.00% or less in a unit mass%.

(3) The arc weld metal according to (1) or (2), in which a Ni content, a Cr content, a Mo content, and the V content may satisfy $Ni/59 + Cr/52 + Mo/96 + V/51 < 0.0200\%$.

in which, in the above formula, each element symbol is a content in mass% of each element.

(4) The arc weld metal according to any one of (1) to (3) may contain 0.13% or more and 0.30% or less of C in a unit mass%.

(5) The arc weld metal according to any one of (1) to (4) may contain 0.025% or more and 0.120% or less of Ti in a unit mass%.

(6) The arc weld metal according to any one of (1) to (5) may contain one or more kinds selected from the group of: 0.01% or more and 0.20% or less of Al, 0.020% or more and 0.120% or less of Ti, 0.10% or more and 1.00% or less of Cu, 0.05% or more and 1.50% or less of Ni, 0.050% or more and 1.000% or less of Cr, 0.050% or more and 1.000% or less of Mo, 0.050% or more and 0.300% or less of V, 0.050% or more and 0.0600% or less of B, 0.005% or more and 0.100% or less of Nb, 0.005% or more and 0.050% or less of Zr, and 0.0005% or more and 0.0100% or less of Mg in a unit mass%.

(7) A welded joint according to another aspect of the present invention may include a plurality of base steel sheets; and an arc weld metal which joins the plurality of base steel sheets, in which the arc weld metal is the arc weld metal according to any one of (1) to (5) above, a Si content of each of the plurality of base steel sheets is 0.60% or more and 2.00% or less in mass%, and a sheet thickness of at least one of the plurality of base steel sheets is 4.0 mm or less.

(8) A welded joint according to another aspect of the present invention may include: a plurality of base steel sheets; and an arc weld metal which joins the plurality of base steel sheets, in which the arc weld metal is the arc weld metal according to (6), a Si content of each of the plurality of base steel sheets is 0.60% or more and 2.00% or less in mass%, and a sheet thickness of at least one of the plurality of base steel sheets is 4.0 mm or less.

(9) In the welded joint according to (7), at least one of the plurality of base steel sheets may have a tensile strength of 980 MPa or more.

(10) In the welded joint according to (8), at least one of the plurality of base steel sheets may have a tensile strength of 980 MPa or more.

(11) A vehicle member according to another aspect of the present invention includes the welded joint according to (7).

(12) A vehicle member according to another aspect of the present invention includes the welded joint according to (8).

[Effects of the Invention]

According to the present invention, it is possible to provide an arc weld metal capable of improving both electrodeposition coating properties and hydrogen embrittlement resistance of a weld, and a welded joint and a vehicle member excellent in both electrodeposition coating properties and hydrogen embrittlement resistance of a weld.

[Brief Description of the Drawings]

FIG. 1 is a schematic diagram of an analysis method when chemical compositions of a weld metal are measured using emission spectroscopic analysis.

FIG. 2 is a schematic diagram of an analysis method when chemical compositions of a weld metal are measured using chemical analysis.

FIG. 3 is a schematic diagram of an analysis method when the amount of residual austenite in a weld metal is measured.

FIG. 4 is a cross section schematic diagram of a weld metal and a welded joint when the welded joint is a lap fillet joint.

FIG. 5 is a cross section schematic diagram of a weld metal and a welded joint when the welded joint is a T-shaped fillet joint.

FIG. 6 is a schematic diagram of a coating properties evaluation region.

[Embodiment of the Invention]

First, an arc weld metal according to a first embodiment of the present invention is described. Hereinafter, the arc weld metal may be simply referred to as a weld metal. The present inventors have found that the hydrogen embrittlement resistance is improved by generating residual austenite in the weld metal. Specifically, the present inventors have found that residual austenite is used to trap hydrogen entering a weld metal to suppress hydrogen diffusion into a stress concentration portion, thereby making it possible to suppress hydrogen embrittlement.

On the other hand, it has also been found that Si, which is an element for stabilizing residual austenite, impairs electrodeposition coating properties. The present inventors investigated a welded joint in which an electrodeposition coating failure occurred, and found that weld slag with insulation properties containing Si and the like was formed in a region in which an electrodeposition coating failure occurred. The insulator adhering to the surface of the weld bead inhibits the formation of a coating film during electrodeposition coating, and causes electrodeposition coating failure.

When the amount of Si in the arc weld metal is increased, the amount of slag with insulation properties generated inevitably increases, and the electrodeposition coating properties is impaired. Therefore, the present inventors have intensively studied means for ensuring the amount of residual austenite in the weld metal without impairing the electrodeposition coating properties of the weld metal, and have conceived an arc weld metal according to the present embodiment described in detail below.

The arc weld metal according to the first embodiment of the present invention contains, in a unit mass%,

0.10% or more and 0.30% or less of C,
0.30% or more and 1.00% or less of Si,
1.30% or more and 3.00% or less of Mn,

0.0500% or less of P,
0.0100% or less of S,
0.0100% or less of N,
0.0200% or more and 0.0700% or less of O, and
5.00% or less in total of one or more kinds selected from the group of Al, Ti, Cu, Ni, Cr, Mo, V, B, Nb, Zr, and Mg, a remainder including iron and impurities. Further, the arc weld metal according to the present embodiment has a residual austenite volume percentage of 3.0% or more and 16.0% or less.

Hereinafter, "%" indicating the amount of the element all means "mass%".

(C: 0.10% or more and 0.30% or less)

C is an important element that affects the strength of the weld metal. When the C content of the weld metal is less than 0.10%, the strength of the weld metal is insufficient. Further, when the C content of the weld metal is less than 0.10%, the residual austenite amount of the weld metal is insufficient. On the other hand, when the C content of the weld metal is more than 0.30%, the toughness of the weld metal is impaired. Therefore, the C content of the weld metal is 0.10% or more and 0.30% or less. The C content of the weld metal is preferably 0.12% or more, 0.13% or more, 0.14% or more, 0.15% or more, or 0.18% or more. The C content of the weld metal is preferably 0.28% or less, 0.25% or less, 0.22% or less, or 0.20% or less. The most preferable C content is considered to be within a range of 0.14% or more and 0.2% or less.

(Si: 0.30% or more and 1.00% or less)

Si suppresses the formation of a carbide and stabilizes residual austenite. Si also contributes to deoxidation of the weld metal. If the Si content of the weld metal is less than 0.30%, these effects cannot be obtained. On the other hand, when the Si content of the weld metal is more than 1.00%, the amount of slag with insulation properties increases, and the electrodeposition coating properties of the weld metal is impaired. Therefore, the Si content of the weld metal is 0.30% or more and 1.00% or less. The Si content of the weld metal is preferably 0.35% or more, 0.40% or more, or 0.50% or more. The Si content of the weld metal is preferably 0.95% or less, 0.90% or less, or 0.80% or less.

(Mn: 1.30% or more and 3.00% or less)

Mn is an important element for improving hardenability of the weld metal. Mn is concentrated in the austenite phase together with C to stabilize the austenite phase. When the Mn content of the weld metal is less than 1.30%, hardenability is insufficient, and the strength of the weld metal is insufficient. On the other hand, when the Mn content of the weld metal is more than 3.00%, the toughness of the weld metal is impaired. Therefore, the Mn content of the weld metal is 1.30% or more and 3.00% or less. The Mn content of the weld metal is preferably 1.50% or more, 1.80% or more, or 2.00% or more. The Mn content of the weld metal is preferably 2.80% or less, 2.50% or less, or 2.20% or less.

(P: 0.0500% or less)

P is an impurity. When the P content of the weld metal is more than 0.0500%, P segregates at a grain boundary of the weld metal, and the toughness of the weld metal is impaired. Therefore, the P content of the weld metal is 0.0500% or less. The P content is preferably 0.0450% or less, 0.0400% or less, or 0.0300% or less. From the viewpoint of securing the toughness of the welded joint, the P content is preferably as small as possible. Therefore, the lower limit value of the P content is not determined. The lower limit value of the P content may be set to 0%. However, in consideration of the manufacturing cost of the welded joint, the P content of the weld metal may be 0.0005% or more, 0.0010% or more, or 0.0100% or more.

(S: 0.0100% or less)

S is an impurity. When the S content of the weld metal is more than 0.0100%, S segregates at a grain boundary of the weld metal, and the toughness of the weld metal is impaired. Therefore, the S content of the weld metal is 0.0100% or less. The S content is preferably 0.0080% or less, 0.0060% or less, or 0.0050% or less. From the viewpoint of securing the toughness of the welded joint, the S content is preferably as small as possible. Therefore, the lower limit value of the S content is not determined. The lower limit value of the S content may be set to 0%. However, in consideration of the manufacturing cost of the welded joint, the S content of the weld metal may be 0.0005% or more, 0.0010% or more, or 0.0030% or more.

(N: 0.0100% or less)

N is an element that enters the weld metal at the time of welding. N contributes to high strengthening of the weld metal, but when the N content is excessive, the toughness of the weld metal decreases. Therefore, the upper limit of the N content is 0.0100%. The N content may be 0.0080% or less, 0.0070% or less, or 0.0060% or less. In the arc weld metal according to the present embodiment, since the strength is secured by an element other than N, the lower limit value of the N content is not determined. The lower limit value of the N content may be set to 0%. On the other hand, the N content may be 0.0001 % or more, 0.0010% or more, or 0.0030% or more.

(O: 0.0200% or more and 0.0700% or less)

O is an element that enters the weld metal at the time of welding. Since O forms an oxide in the weld metal, when the O content is excessive, the toughness of the weld metal is reduced. Therefore, the upper limit of the O content is set to 0.07%. The O content may be 0.06% or less, 0.05% or less, or 0.04% or less. From the viewpoint of securing the toughness of the welded joint, the O content is preferably as small as possible. Therefore, the lower limit value of the O content may be set to 0%. On the other hand, in order to reduce the O content of the weld metal, it is necessary to contain a deoxidizing element in the weld metal. An increase in the deoxidizing element leads to an increase in construction cost. Therefore, the O content of the weld metal is desirably 0.02% or more. The O content may be 0.025% or more, 0.03% or more, or 0.035% or more.

The remainder of the chemical compositions of the weld metal includes of iron and impurities. The impurity means, for example, a raw material such as ore or scrap, a component mixed due to various factors in the manufacture step when the base metal and the filler metal are industrially manufactured, or a component mixed from the welding environment when the base metal is welded, which is acceptable within a range not adversely affecting the weld metal according to the present embodiment. In addition, instead of a part of iron of the remainder, the weld metal may contain optional elements described below.

(One or more kinds of optional elements selected from the group of Al, Ti, Cu, Ni, Cr, Mo, V, B, Nb, Zr, and Mg: preferably 0.03% or more and 5.00% or less in total)

Al deoxidizes the weld metal. Ti deoxidizes the weld metal and refines the microstructure of the weld metal. Cu improves welding workability and hardenability of the weld metal. Ni improves the low temperature toughness of the weld metal. Cr, Mo, V, and B improve hardenability of the weld metal. Nb refines the microstructure of the weld metal. Zr improves the strength of the weld metal. Mg deoxidizes the weld metal. Therefore, these elements may be contained in the weld metal. For example, in the weld metal, the total amount of these optional elements may be 0.03% or more, 0.10% or more, 0.50% or more, or 1.50% or more. On the other hand, by reducing the amount of the alloying element, the toughness of the weld metal can be secured, and the construction cost can be reduced. Therefore, the total amount of these optional elements may be 5.00% or less, 3.50% or less, 2.50% or less, or 2.20% or less.

These optional elements are often contained in the high strength steel sheet. The weld metal is formed by melting and mixing a base metal on which the weld metal is provided and a filler metal. Therefore, when the base metal on which the weld metal is provided is a high strength steel sheet, these optional elements may migrate from the base metal to the weld metal. On the other hand, these optional elements are not essential from the viewpoint of securing electrodeposition coating properties and hydrogen embrittlement resistance of the weld.

Since the slag with insulation properties that adversely affects the electrodeposition coating properties is mainly composed of Si, the electrodeposition coating properties can be secured by controlling the Si content within the above range.

Hydrogen trapping for improving hydrogen embrittlement resistance is performed using residual austenite described later, and the above-mentioned optional elements do not significantly affect the amount of residual austenite. For example, Mitsuru Tanino et al., "Chemistry of Steel Material" (Uchida Rokakuho, 2001, p. 103 to 104), cites C, N, Mn, Ni, Cu, and the like as examples of austenite forming elements, and it is considered that C is particularly important. In addition, in "Influence of grain size on transformation induced plasticity of metastable Fe-Ni-C austenite" (The journal of the Japan Institute of Metals, vol. 38, pp. 871 to 876, 1974) by Seishi Maki et al., it is described that austenite is thermally stabilized as the Ms point decreases. This Ms point is estimated by, for example, the following equation ("Calculation Formula of Transformation Temperature of Carbon Equivalent" general incorporated association Japan Welding Technology Information Center, http://wwwit.jwes.or.jp/weld_simulator/cal1.jsp).

$$Ms = 521 - 353C - 22Si - 24.3Mn - 7.7Cu - 17.3Ni - 17.7Cr - 25.8Mo$$

In the calculation formula of Ms, it is found that the influence of the C content on the austenite stabilizing action is particularly large.

For the above reasons, the total amount of these optional elements may be 0%. In addition, when the total amount of various optional elements is defined as described above, it is not necessary to independently define the amount of each optional element. On the other hand, instead of or in addition to being defined by the total amount of various optional elements, the amount of each optional element may be independently defined as follows.

(Al: preferably 0.01% or more and 0.20% or less)

Al deoxidizes the weld metal. Therefore, Al may be contained in the weld metal. The Al content may be 0%, but for example, the above effect can be preferably obtained by setting the Al content to 0.01% or more. The Al content may be 0.05% or more, 0.08% or more, or 0.10% or more. On the other hand, the Al content may be 0%. When the Al content of the weld metal is 0.20% or less, precipitation of an excessive amount of the alumina-based oxide in the weld metal can be avoided, and the toughness of the weld metal can be further improved. The Al content may be 0.18% or less, 0.15% or less, or 0.12% or less.

(Ti: preferably 0.020% or more and 0.120% or less)

Ti deoxidizes the weld metal and further refines the microstructure of the weld metal. In addition, Ti contained in the filler metal to be the material of the weld metal has a function of improving the conductivity of the slag adhering to the surface of the weld metal to further improve the electrodeposition coating properties. Therefore, a weld metal containing Ti obtained from a filler metal containing Ti has high electrodeposition coating properties. The Ti content may be 0%, but for example, these effects can be preferably obtained by setting the Ti content of the weld metal to 0.020% or more. The Ti content may be 0.025% or more, 0.030% or more, 0.050% or more, 0.060% or more, or 0.100% or more. On the other hand, by setting the Ti content of the weld metal to 0.120% or less, the amount of coarse precipitates in the weld metal can be reduced, and the toughness of the weld metal can be further improved. The Ti content may be 0.100% or less, 0.080% or less, or 0.060% or less.

(Cu: preferably 1.00% or less)

When Cu is plated on the surface of the welding wire as a material of the weld metal, welding workability is improved. Cu improves hardenability of the weld metal. Therefore, Cu may be contained in the weld metal. The Cu content may be 0%, but for example, by setting the Cu content to 0.10% or more, 0.20% or more, or 0.30% or more, the above-described effects can be preferably obtained. On the other hand, when the Cu content of the weld metal is 1.00% or less, the toughness of the weld metal can be further improved. The Cu content may be 0.90% or less, 0.80% or less, or 0.60% or less.

(Ni: preferably 1.50% or less)

Ni improves the low temperature toughness of the weld metal. Therefore, Ni may be contained in the weld metal. The Ni content may be 0%, but for example, the above-described effect can be preferably obtained by setting the Ni content to 0.05% or more, 0.10% or more, or 0.12% or more. On the other hand, when the Ni content of the weld metal is 1.50% or less, excessive curing of the weld metal can be avoided, and the toughness of the weld metal can be stably secured. The Ni content may be 1.00% or less, 0.95% or less, 0.50% or less, 0.20% or less, 0.19% or less, or 0.15% or less.

(Cr: preferably 1.000% or less)

Cr improves hardenability of the weld metal. Therefore, Cr may be contained in the weld metal. The Cr content may be 0%, but for example, the above-described effects can be preferably obtained by setting the Cr content to 0.050% or more, 0.100% or more, or 0.120% or more. On the other hand, when the Cr content of the weld metal is 1.000% or less, the cost related to the alloy is reduced, which is economically advantageous. Furthermore, the toughness of the weld metal can be further improved by setting the Cr content of the weld metal to 1.000% or less. The Cr content may be 0.900% or less, 0.800% or less, or 0.600% or less.

(Mo: preferably 1.000% or less)

Mo improves hardenability of the weld metal. Therefore, Mo may be contained in the weld metal. The Mo content may be 0%, but for example, the above-described effect can be preferably obtained by setting the Mo content to 0.050% or more, 0.100% or more, or 0.120% or more. In addition, when the Mo content of the weld metal is 1.000% or less, the cost related to the alloy is reduced, which is economically advantageous. Furthermore, the toughness of the weld metal can be further improved by setting the Mo content of the weld metal to 1.000% or less. The Mo content may be 0.900% or less, 0.800% or less, or 0.600% or less.

(V: preferably 0.300% or less)

V improves hardenability of the weld metal. Therefore, V may be contained in the weld metal. The V content may be 0%, but for example, the above-described effects can be preferably obtained by setting the V content to 0.050% or more, 0.100% or more, or 0.120% or more. On the other hand, when the V content of the weld metal is 0.300% or less, the cost related to the alloy is reduced, which is economically advantageous. Furthermore, the toughness of the weld metal can be further improved by setting the V content of the weld metal to 0.300% or less. The V content may be 0.280% or less, 0.250% or less, or 0.200% or less.

(B: preferably 0.0600% or less)

B improves hardenability of the weld metal. Therefore, B may be contained in the weld metal. The B content may be 0%, but for example, the above-described effects can be preferably obtained by setting the B content to 0.0005% or more, 0.0010% or more, or 0.0050% or more. On the other hand, the toughness of the weld metal can be further improved by setting the B content of the weld metal to 0.0600% or less. The B content may be 0.0500% or less, 0.0450% or less, or 0.0400% or less.

(Nb: preferably 0.100% or less)

Nb forms a carbonitride in the weld metal, and contributes to refinement of the microstructure of the weld metal and improvement in strength. Therefore, Nb may be contained in the weld metal. The Nb content may be 0%, but for example, the above-described effect can be preferably obtained by setting the Nb content to 0.005% or more, 0.010% or more, or 0.020% or more. On the other hand, the toughness of the weld metal can be further improved by setting the Nb content of the weld metal to 0.100% or less. The Nb content may be 0.080% or less, 0.050% or less, or 0.040% or less.

(Zr: preferably 0.050%)

Zr is precipitated as a fine nitride in the weld metal to improve the strength of the weld metal. Therefore, Zr may be contained in the weld metal. The Zr content may be 0%, but for example, the above-described effect can be preferably obtained by setting the Zr content to 0.005% or more, 0.006% or more, or 0.007% or more. On the other hand, coarse precipitates can be prevented from being generated in the weld metal, and the toughness of the weld metal can be further improved by setting the Zr content of the weld metal is 0.050% or less. The Zr content may be 0.040% or less, 0.035% or less, or 0.030% or less.

(Mg: preferably 0.0100% or less)

Mg is an element added for deoxidizing the weld metal. Therefore, Mg may be contained in the weld metal. The Mg content may be 0%, but for example, the above-described effect can be preferably obtained by setting the Mg content to 0.0005% or more, 0.0007% or more, or 0.0010% or more. On the other hand, when the Mg content of the weld metal is 0.0100% or less, reduction in toughness of the weld metal can be avoided. The Mg content may be 0.0050% or less, or 0.0030% or less.

(Residual austenite volume percentage: 3.0% or more and 16.0% or less)

Generally, hydrogen embrittlement cracks occur at a stress concentration site. When the joint shape is a lap fillet joint or a T-shaped fillet joint, the stress concentration site is, for example, near the root portion.
The residual austenite phase contained in the weld metal traps hydrogen entering the weld metal at the time of arc welding, so that the hydrogen concentration at the stress concentration site such as the tip of the root portion can be reduced to improve hydrogen embrittlement resistance of the weld metal. When the volume percentage of residual austenite is 3.0% or more, the above effect can be obtained. The volume percentage of residual austenite may be 4.0% or more, 5.0% or more, or 8.0% or more. The upper limit value of the volume percentage of residual austenite is not particularly limited, but it is estimated that it is difficult to set the volume percentage of residual austenite to more than 16.0% in consideration of the chemical composition of the weld metal according to the present embodiment. Therefore, the volume percentage of residual austenite may be 16.0% or less, 15.0% or less, or 13.0% or less.
The remainder of the metallographic structure of the weld metal is not particularly limited. The remainder of the metallographic structure may be composited of, for example, ferrite, martensite, or the like. The volume percentage of martensite of the weld metal is more preferably less than 50%, 48% or less, 45% or less, or 40% or less. As a result, excessive curing of the weld metal can be prevented, and hydrogen embrittlement resistance of the weld metal can be further improved.

(Ni/59 + Cr/52 + Mo/96 + V/51: preferably less than 0.0200%)

Ni, Cr, Mo, and V contained in the weld metal have an effect of improving hardenability of the weld metal, but may form precipitates in the weld metal and reduce toughness of the weld metal. Therefore, the parameter A obtained by substituting the Ni content, the Cr content, the Mo content, and the V content into the following formula is preferably less than 0.0200%.

$$\text{Parameter A} = \text{Ni}/59 + \text{Cr}/52 + \text{Mo}/96 + \text{V}/51$$

In other words, it is preferable that the Ni content, the Cr content, the Mo content, and the V content satisfy Ni/59 + Cr/52 + Mo/96 + V/51 < 0.0200%. The parameter A is more preferably less than 0.0100% or less than 0.0050%.

In the above formula, each element symbol is a content in mass% of each element.

The weld metal may be subjected to surface treatment. For example, a chemical conversion coating film, plating, a coating film, or the like may be provided on the surface of the weld metal. Suitable examples of the plating include hot-dip galvanizing, alloying hot-dip galvanizing, electro galvanizing, hot-dip aluminium coating, and electro aluminium coating. Suitable examples of the coating film include an electrodeposition coating film. In addition, the weld metal may be subjected to blasting treatment such as shot blasting and wet blasting, peening treatment such as UIT and hammer peening, grinding with a grinder or the like. Hydrogen embrittlement cracks of the weld metal occur within a relatively short time after completion of welding. Therefore, it is considered that the post-treatment performed after a while from the end of welding does not affect the frequency of occurrence of hydrogen embrittlement cracks of the weld metal.

As a method for measuring the chemical compositions of the weld metal, either a method using emission spectroscopic analysis or a method using chemical analysis may be used. The emission spectroscopic analysis is suitable for a joint capable of securing a wide analysis surface, and the chemical analysis is suitable for a joint capable of securing a large collection amount of a test piece. Two measurement methods can be selectively used according to the actual situation of the joint. In either method, the analysis results are almost the same. However, in the case of performing emission spectroscopic analysis, it is preferable to perform measurement three or more times, for example, and to regard the average value thereof as the chemical composition of the weld metal.

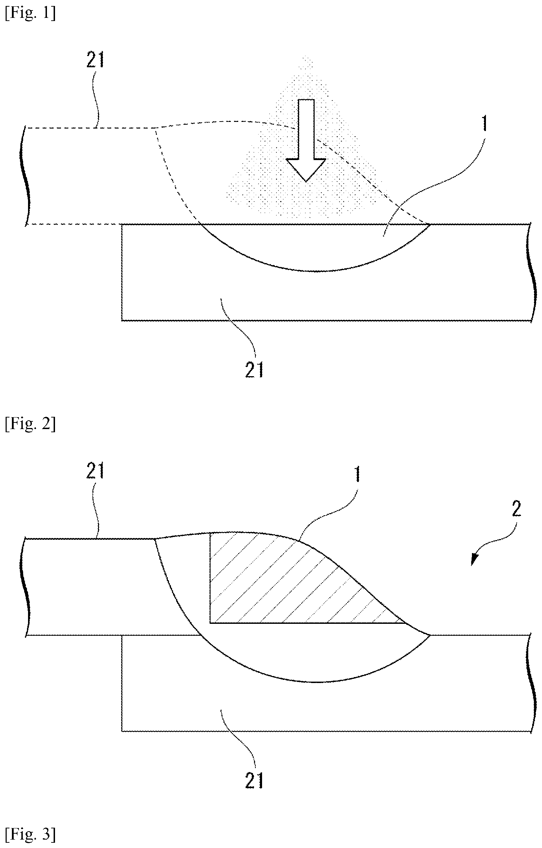

A method of emission spectroscopic analysis is described with reference to FIG. 1. FIG. 1 is a diagram for explaining a method for measuring chemical compositions of a weld metal 1 by emission spectroscopic analysis in a welded joint 2 formed by lap fillet welding of two base steel sheets 21. FIG. 1 is a diagram schematically illustrating a part of a cross section of the welded joint 2 in a direction perpendicular to a longitudinal direction of the weld metal 1. In the case of using optical emission spectroscopic analysis, first, the weld metal 1 is cut so as to expose the inside of the weld metal 1, and the weld metal 1 is appropriately prepared. For example, when the welded joint 2 in which the weld metal 1 is disposed is a lap fillet joint, as shown in FIG. 1, one base steel sheet 21 (base steel sheet 21 indicated by a broken line) of the welded joint 2 is removed, and the weld metal 1 is cut and polished so that the surface of the other base steel sheet 21 (base steel sheet 21 indicated by a solid line) and the cross section of the weld metal 1 are included in the same plane. Next, emission spectroscopic analysis is performed on the weld metal 1. At this time, the melting boundary which is the boundary between the weld metal 1 and the base steel sheet 21 and the vicinity thereof are not included in the analysis region. In the case of a normal arc welding joint 2, a region within 100 $\mu$m from the melting boundary may be excluded from the analysis region. This is because in the vicinity of the melting boundary, the component of the base steel sheet 21 tends to be concentrated and have a component different from the average component of the weld metal 1. Even when the shape of the welded joint is not the lap fillet joint illustrated in FIG. 1, the emission spectroscopic analysis may be performed on the cross section of the weld metal while excluding the region within 100 $\mu$m from the melting boundary from the analysis region.

Next, a method of chemical analysis is described with reference to FIG. 2. FIG. 2 is a diagram for explaining a method of measuring chemical compositions of the weld metal 1 by chemical analysis in the welded joint 2 formed by lap fillet welding of two base steel sheets 21. FIG. 2 is a diagram schematically illustrating a part of a cross section of the welded joint 2 in a direction perpendicular to a longitudinal direction of the weld metal 1. In the case of using chemical analysis, first, the weld metal 1 is collected from the welded joint 2. The collecting position of the weld metal 1 is a position 100 $\mu$m or more away from the melting boundary. For example, when the welded joint 2 on which the weld metal 1 is disposed is a lap fillet joint, the weld metal 1 may be collected as illustrated in FIG. 2. A hatched portion in FIG. 2 is a collection site of the weld metal 1. In addition, since dirt such as slag may adhere to the surface of the weld metal 1, the outermost layer of the weld metal 1 is not to be analyzed. Therefore, it is necessary to grind the surface of the weld metal 1 before collecting the weld metal 1. Then, the collected weld metal 1 may be subjected to normal chemical analysis. Even when the shape of the welded joint is not the lap fillet joint illustrated in FIG. 2, a good measurement result can be obtained by collecting the weld metal 1 while avoiding a region within 100 $\mu$m from the melting boundary. For example, by applying appropriate corrosion to the cross section of the welded joint containing the weld metal, the melting boundary becomes clear. By making the melting boundary clear in this manner, the weld metal can be collected while avoiding a region within 100 $\mu$m from the melting boundary even in a welded joint having any shape. The position where the weld metal is collected is preferably a bead stationary portion.

Next, a method for measuring the residual austenite volume percentage of the weld metal is described with reference to FIG. 3. FIG. 3 is a diagram for explaining a method for measuring the residual austenite volume percentage of the weld metal 1 in the welded joint 2 formed by lap fillet welding of two base steel sheets 21. FIG. 3 is a view schematically illustrating a part of a cross section of the welded joint 2 in a direction perpendicular to the longitudinal direction of the weld metal 1. The method for measuring the residual austenite volume percentage of the weld metal 1 is as follows. First, the weld metal 1 is cut so as to expose the inside of the weld metal 1, and a cut surface is appropriately prepared. For example, when the welded joint 2 in which the weld metal 1 is disposed is a lap fillet joint, the weld metal 1 may be cut perpendicularly to the welding direction as illustrated in FIG. 3. Then, analysis using an X-ray diffractometer is performed in a region 100 $\mu$m or more away from the outer periphery of the weld metal 1. The outer periphery of the weld metal 1 is a concept including both a melting boundary between the weld metal 1 and the base steel sheet 21 and a surface of the weld metal 1. In FIG. 3, a region surrounded by a broken line is an analysis region. Based on the integrated intensity ratio of the peak of the (110) lattice plane of the ferrite phase and the peak of the (111) lattice plane of the austenite phase thus obtained, the fraction of the austenite phase is obtained. Specifically, the fraction of the austenite phase is obtained by substituting the X-ray diffraction result into the following formula.

$$V = l_\gamma / (l_\alpha + l_\gamma)$$

V: Fraction of residual austenite
$l_\alpha$: Integrated intensity of peak of ferrite phase (110) lattice plane
$l_\gamma$: Integrated intensity of peak of austenite phase (111) lattice plane

Although the weld metal 1 according to the present embodiment may contain martensite, in this measurement method, the fraction of martensite is included in the ferrite fraction. The reason is that the crystal structure of martensite generated in the steel including C: 0.10% or more and 0.30% or less is substantially the same as the crystal structure of ferrite.

A method for measuring the martensite area fraction of the weld metal is as follows. First, a sample for observing a cross section of the weld metal is prepared. Nital corrosion of the cross section is then performed to reveal the microstructure. Then, the cross section of the weld metal is observed in five visual field with a scanning electron microscope (SEM) to determine the area of the martensite microstructure in the visual field. Then, the area fraction of martensite is calculated by dividing the area of martensite by the visual field area. The measurement region is a region 100 $\mu$m or more away from the outer periphery of the weld metal 1. That is, the area fraction of martensite is measured in a region surrounded by a broken line in FIG. 3.

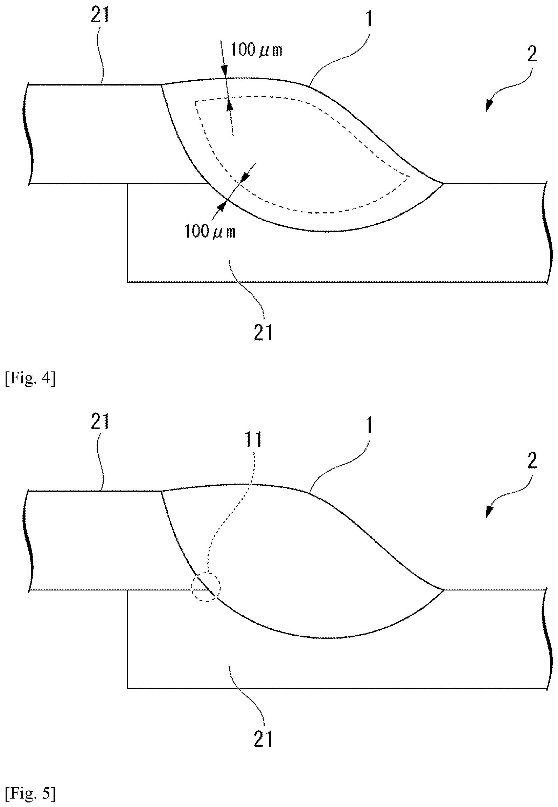

Next, a welded joint according to a second embodiment of the present invention is described. As illustrated in FIG. 4 or 5, a welded joint 2 according to the second embodiment includes a plurality of base steel sheets 21 and an arc weld metal 1 that joins the plurality of base steel sheets 21. The arc weld metal 1 is the arc weld metal 1 according to the first embodiment described above. Although the drawing illustrates an example of two base steel sheets 21, the number of base steel sheets 21 may be plural, and three or more base steel sheets may be joined by the arc weld metal 1. Further, the Si content of each of the plurality of base steel sheets 21 is 0.60% or more and 2.00% or less.

The shape of the welded joint 2 is not particularly limited. For example, the welded joint 2 according to the present embodiment may be a lap fillet joint illustrated in FIG. 4 or a T-shaped fillet joint illustrated in FIG. 5. In addition, various shapes such as a butt welded joint can be applied to the welded joint 2 according to the present embodiment.

In the welded joint 2, the plurality of base steel sheets 21 are joined by the arc weld metal 1 according to the first embodiment. As a result, the welded joint 2 according to the present embodiment has high hydrogen embrittlement resistance and high electrodeposition coating properties in the weld metal 1.

The thickness of at least one of the plurality of base steel sheets is set to 4.0 mm or less. More preferably, the thickness of at least one of the plurality of base steel sheets is 3.8 mm or less, 3.5 mm or less, or 3.0 mm or less. As a result, the strength of the welded joint 2 can be increased. As a matter of course, various preferable aspects of the weld metal 1 according to the first embodiment can be applied to the weld metal 1 of the welded joint 2 according to the present embodiment.

In each of the plurality of base steel sheets 21 composing the welded joint 2, the Si content needs to be 0.60% or more and 2.00% or less. When the content of Si in the base steel sheet 21 exceeds 2.00%, even if the Si content in the weld metal 1 is within the above range, slag with insulation properties containing Si as a main component is formed in the vicinity of the base steel sheet 21 on the surface of the weld metal 1, and the electrodeposition coating properties of the weld metal 1 is impaired. The Si content of the base steel sheet 21 is preferably 1.80% or less, 1.60% or less, or 1.40% or less. On the other hand, when the Si content of the base steel sheet 21 is less than 0.60%, the adhesion of the oxidation scale formed on the surface of the base steel sheet 21 during arc welding is impaired, and the coating film is peeled off together with the oxidation scale, so that the electrodeposition coating properties of the base steel sheet 21 is impaired. The Si content of the base steel sheet 21 is preferably 0.80% or more, 1.00% or more, or 1.20% or more.

The composition of the base steel sheet is not particularly limited as long as the Si content and the thickness are within the above ranges, but preferred examples is given below.

The tensile strength of the base steel sheet is not particularly limited, but for example, the tensile strength of at least one of the plurality of base steel sheets is preferably 980 MPa or more, 1000 MPa or more, 1200 MPa or more, or 1400 MPa or more. This makes it easy to apply the welded joint according to the present embodiment to a vehicle member.

The base steel sheet may be subjected to surface treatment. For example, the base steel sheet may have a chemical conversion coating film, plating, a coating film, and the like. Suitable examples of the plating include hot-dip galvanizing, alloying hot-dip galvanizing, electro galvanizing, hot-dip aluminium coating, and electro aluminium coating. Suitable examples of the coating film include an electrodeposition coating film. The weld metal may be subjected to a blasting treatment such as shot blasting or wet blasting. For example, in order to remove scale or the like adhering to the sheet surface before welding, the base steel sheet and the weld metal may be subjected to a blast treatment after welding. Furthermore, peening treatment such as UIT and hammer peening, grinding with a grinder or the like may be applied to the weld metal and the base metal around the weld metal. Hydrogen embrittlement cracks of the weld metal occur within a relatively short time after completion of welding. Therefore, it is considered that the post-treatment performed after a while from the end of welding does not affect the frequency of occurrence of hydrogen embrittlement cracks of the weld metal.

Next, a vehicle component according to a third embodiment of the present invention is described. The vehicle component according to the third embodiment includes the welded joint according to the second embodiment. As a result, the vehicle component according to the present embodiment has high hydrogen embrittlement resistance and high electrodeposition coating properties in both the weld metal and the base steel sheet. As a matter of course, various preferred aspects of the welded joint according to the second embodiment can be applied to the welded joint of the vehicle component according to the present embodiment. In addition, it is not necessary that all the joint portions of the vehicle components are the welded joint according to the second embodiment.

Next, a preferred example of the method for manufacturing an arc weld metal according to the first embodiment is described. A preferred example of the method for producing an arc weld metal includes arc welding a plurality of base steel sheets to obtain an arc weld metal. Here, the Si content of each of the plurality of base steel sheets is set to 2.00% or less. The component of the arc weld metal is set to be within the range of the chemical composition of the arc weld metal according to the first embodiment. When the arc welding is finished and the weld metal is cooled, the average cooling rate from 800°C to 300°C is set to 40°C/sec to 15°C/sec.

First, a plurality of base steel sheets is arc welded to form an arc weld metal. In a plurality of base steel sheets to be arc-welded, it is necessary to set the Si content of each of the base steel sheets to 2.00% or less. As a result, it is possible to suppress the formation of the slag with insulation properties in the vicinity of the base steel sheet in the surface of the weld metal and to secure the electrodeposition coating properties. When it is necessary to ensure not only the electrodeposition coating of the weld metal but also the electrodeposition coating of the base steel sheet, the lower limit value of the Si content of the base steel sheet is set to 0.60% or more. The preferred Si content of the base steel sheet conforms to the base steel sheet of the welded joint according to the second embodiment.

Arc welding is fusion welding using an electric arc as a heat source. If necessary, a filler metal such as a welding wire or a welding rod may be supplied to the arc weld. The weld metal is a metal melted and solidified during welding. The weld metal is formed by mixing and solidifying a melted base steel sheet and a filler metal. Therefore, the components of the weld metal can be controlled via the chemical compositions of the base steel sheet, the chemical compositions of the filler metal, and the mixing rate of the base steel sheet and the filler metal. The mixing rate of the base steel sheet and the filler metal can be controlled via a filler metal feeding speed, an amount of heat input, a welding speed, and the like at the time of arc welding. Furthermore, the yield rate of the alloying element can also be taken into account in controlling the components of the weld metal. The yield rate is the amount of elements remaining in the weld metal after welding with respect to the amount of elements contained in the base steel sheet and the filler metal before welding. For example, the yield rate of Al which is easily oxidized to generate slag is low. The yield rate under a certain welding condition can be estimated by creating a welded joint under the same condition as the welding condition and analyzing the components of the weld metal.

The components of the arc weld metal may be set to be within the range of the components of the arc weld metal according to the first embodiment while comprehensively considering these elements.

Further, the cooling rate of the arc weld metal obtained by arc welding needs to be within a predetermined range. Specifically, when the arc welding is finished and the weld metal is cooled, the average cooling rate from 800°C to 300°C is set to 40°C/sec to 15°C/sec. The average cooling rate is a value obtained by dividing 500°C (= 800°C - 300°C) by the time taken for the temperature of the weld metal to decrease from 800°C to 300°C. In order to control the amount of residual austenite, it is extremely important to control the cooling rate from when the temperature of the weld metal reaches the point A3 to when the temperature of the weld metal reaches the point Ms. Therefore, in the method for manufacturing a weld metal according to the present embodiment, it is preferable to control the average cooling rate to be from 800°C to 300°C.

When the average cooling rate of the arc weld metal exceeds 40°C/sec, the phase transformation from austenite to martensite is promoted, and the amount of residual austenite may be insufficient. On the other hand, when the average cooling rate of the arc weld metal is less than 15°C/sec, the phase transformation from austenite to ferrite is promoted, and the amount of residual austenite may be insufficient.

The cooling rate of the arc weld metal is determined according to the amount of heat input during arc welding, the atmosphere temperature after arc welding, and the total sheet thickness of the plurality of base steel sheets. As the total sheet thickness of the base steel sheet increases, the amount of heat transfer from the weld metal to the base steel sheet increases, and the average cooling rate increases. As the lower the atmosphere temperature, the amount of heat transfer from the weld metal to the atmosphere increases, and the average cooling rate increases. As the amount of heat input increases, the temperature of the base steel sheet increases, the amount of heat transfer from the weld metal to the base steel sheet decreases, and the average cooling rate decreases. Therefore, by appropriately combining these factors, the average cooling rate of the arc weld metal can be set to be within the above range. The amount of heat input is determined according to a current value, a voltage value, and a welding speed in arc welding. As long as the average cooling rate of the arc weld metal is within the above range, various welding conditions can be adopted according to the thickness, components, and the like of the steel sheet.

[Examples]

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

(Example 1)

By arc welding the steel sheets A to D having a sheet thickness of 2.9 mm, various welded joints including an arc weld metal were manufactured. The tensile strengths and Si contents of the steel sheets A to D are shown in Table 1.

[Table 1]

| Base steel sheet | Tensile strength | Si |
|---|---|---|
| Symbols | MPA | Mass% |
| A | 1263 | 0.65 |
| B | 1192 | 1.14 |
| C | 993 | 1.53 |
| D | 1167 | 0.52 |

The arc welding conditions were as follows.

- Welding type: lap fillet welding
- Shape of upper sheet, that is, sheet whose end surface is welded: rectangle of 150 mm in width and 40 mm in length
- Shape of lower sheet, that is, sheet whose surface is welded: rectangle of 150 mm in width and 60 mm in length
- Overlapping space of upper sheet and lower sheet: 10 mm
- Welding current: 220 to 235 A
- Welding voltage: 21 to 26 V
- Welding speed: 0.8 m/min
- Welding length: 100 mm
- Energization mode: DC pulse mode
- Type of shielding gas: following two types

    (1) Gas obtained by adding $H_2$ to a shielding gas of Ar + 20% $CO_2$ so that a partial pressure is 0.5%
    (2) Gas obtained by adding $H_2$ to a shielding gas of Ar + 20% $CO_2$ so that a partial pressure is 1.0%

During arc welding, the components of the weld metal were appropriately adjusted using a filler metal. After arc welding was performed under the above conditions, the average cooling rate of the weld metal from 800°C to 300°C was set to be within the range of 30°C/sec to 17°C/sec.

The hydrogen embrittlement resistance of the weld metal was evaluated as follows. The welded joint after a lapse of 24 hours from the end of arc welding was cut perpendicularly to the welding direction, and the root portion was observed to confirm the presence or absence of cracks. The evaluation criteria were as follows.

- A weld metal that a crack occurred in shielding gas type (1): C
- A weld metal that a crack did not occur in shielding gas type (1) and a crack occurred in shielding gas type (2): B
- A weld metal that a crack did not occur in both shielding gas type (1) and (2): A

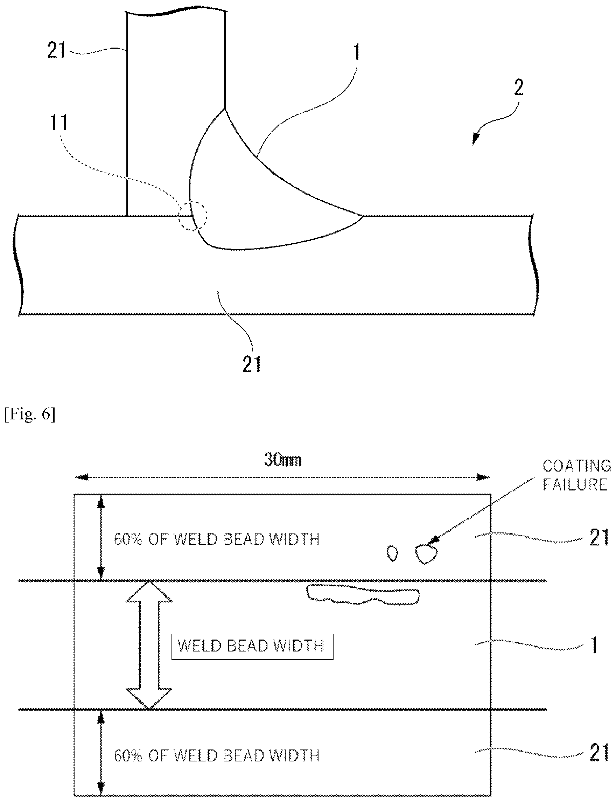

The coating properties of the weld metal and the base steel sheet was evaluated as follows. First, electrodeposition coating was applied to the welded joint. Next, photographs of the weld metal and the base metal were taken from a direction perpendicular to the surface of the base steel sheet. In the photograph, coating properties evaluation regions including the weld metal and the base steel sheet were set. FIG. 6 shows a schematic view of a coating properties evaluation region. For convenience of description, a horizontal direction in FIG. 6 is referred to as a lateral direction, and a vertical direction in FIG. 6 is referred to as a longitudinal direction. The coating properties evaluation region is a rectangular region having the following ranges in the lateral direction and the longitudinal direction and including a part of each of the weld metal 1 and the two base steel sheets 21 welded by the weld metal 1. The range of the coating properties evaluation region in the lateral direction is 30 mm along the longitudinal direction of the weld metal 1. The range of the coating properties evaluation region in the longitudinal direction is a range from a position "the length in the width direction of weld metal 1 (weld bead width) × 60%" away from one weld toe portion of weld metal 1 to a position "the length in the width direction of weld metal 1 (weld bead width) × 60%" away from the other weld toe portion of weld metal 1.

An electrodeposition coating failure portion included in the coating properties evaluation region was specified. Then, the proportion of the electrodeposition coating failure portion in the coating properties evaluation region was calculated using image analysis software. The evaluation criteria were as follows.

- Proportion of an electrodeposition coating failure portion is more than 10 area%: C
- Proportion of an electrodeposition coating failure portion is more than 5 area% and 10 area% or less: B
- Proportion of an electrodeposition coating failure portions is 5 area% or less: A

In addition, the chemical composition of the weld metal was determined by emission spectroscopic analysis and described in the table. The measurement was performed three times, and the average value thereof was described in the table. The remainder of the chemical compositions were iron and impurities. For elements whose content is below the detection limit, the value obtained by adding the symbol "<" to the detection limit was described in the table. Furthermore, the total amount of Al, Ti, Cu, Ni, Cr, Mo, V, B, Nb, Zr, and Mg is also described in the table. In calculating the total amount, the amount of an element whose content was below the detection limit was regarded as 0 mass%.

In addition, the amount of residual austenite and the amount of martensite of the weld metal were determined by the above-described method. The amount of residual austenite in the weld metal is described in the table. The amount of martensite of the weld metal was all within a range of 30 area% or more and 45 area% or less, and thus a description thereof was omitted in the table.

[Table 2]

| NO | Base steel sheet | Remarks column | C | Si | Mn | P | S | N | O |
|----|------------------|----------------|------|------|------|--------|--------|--------|--------|
| 1 | A | Invention example | 0.22 | 0.37 | 1.32 | 0.0035 | 0.0031 | 0.0051 | 0.0325 |
| 2 | A | Invention example | 0.23 | 0.38 | 1.54 | 0.0018 | 0.0007 | 0.0031 | 0.0312 |
| 3 | A | Comparative example | 0.21 | 0.65 | <u>1.28</u> | 0.0053 | 0.0034 | 0.0032 | 0.0289 |
| 4 | A | Invention example | 0.23 | 0.37 | 1.32 | 0.0039 | 0.0034 | 0.0048 | 0.0336 |
| 5 | B | Invention example | 0.16 | 0.64 | 2.03 | 0.0049 | 0.0032 | 0.0041 | 0.0411 |
| 6 | B | Invention example | 0.16 | 0.65 | 2.26 | 0.0032 | 0.0008 | 0.0027 | 0.0366 |
| 7 | B | Invention example | 0.15 | 0.84 | 2.08 | 0.0066 | 0.0022 | 0.0037 | 0.0339 |
| 8 | B | Comparative example | 0.15 | <u>0.23</u> | 2.00 | 0.0066 | 0.0035 | 0.0042 | 0.0381 |
| 9 | B | Invention example | 0.14 | 0.76 | 1.99 | 0.0059 | 0.0023 | 0.0036 | 0.0393 |

(continued)

| NO | Base steel sheet | Remarks column | C | Si | Mn | P | S | N | O |
|----|----|----|----|----|----|----|----|----|----|
| 10 | C | Invention example | 0.11 | 0.85 | 1.75 | 0.0031 | 0.0030 | 0.0045 | 0.0330 |
| 11 | C | Invention example | 0.12 | 0.96 | 1.97 | 0.0014 | 0.0006 | 0.0039 | 0.0493 |
| 12 | C | Comparative example | <u>0.09</u> | <u>1.14</u> | 1.71 | 0.0048 | 0.0033 | 0.0034 | 0.0405 |
| 13 | <u>D</u> | Comparative example* | 0.15 | 0.32 | 1.96 | 0.0054 | 0.0034 | 0.0043 | 0.0443 |

*Invention example when focusing only on arc weld metals
All element contents are mass%
Underlined values are outside scope of present invention

[Table 3]

| NO | Base steel sheet | Remarks column | Al | Ti | Cu | Ni | Cr | Mo | V | B | Nb | Zr | Mg | Total |
|---|---|---|---|---|---|---|---|---|---|---|---|---|---|---|
| 1 | A | Invention example | 0.03 | 0.10 | 0.13 | 0.02 | 0.015 | 0.013 | <0.003 | 0.0010 | 0.006 | <0.005 | <0.0003 | 0.31 |
| 2 | A | Invention example | 0.02 | 0.11 | 0.13 | 1.11 | 0.220 | 0.264 | <0.003 | <0.0004 | 0.007 | 0.006 | 0.0008 | 1.86 |
| 3 | A | Comparative example | 0.02 | 0.05 | 0.13 | <0.01 | 0.015 | 0.012 | <0.003 | <0.0004 | 0.006 | <0.005 | <0.0003 | 0.23 |
| 4 | A | Invention example | 0.03 | 0.10 | <0.003 | <0.01 | <0.010 | 0.013 | <0.003 | 0.0009 | 0.006 | <0.005 | <0.0003 | 0.14 |
| 5 | B | Invention example | 0.15 | 0.06 | 0.13 | 0.02 | 0.170 | 0.052 | <0.003 | 0.0021 | <0.005 | <0.005 | <0.0003 | 0.58 |
| 6 | B | Invention example | 0.14 | 0.07 | 0.13 | 1.12 | 0.374 | 0.303 | <0.003 | 0.0015 | <0.005 | 0.007 | 0.0007 | 2.14 |
| 7 | B | Invention example | 0.14 | 0.02 | 0.12 | 1.12 | 0.370 | 0.299 | <0.003 | 0.0012 | <0.005 | <0.005 | <0.0003 | 2.08 |
| 8 | B | Comparative example | 0.14 | 0.02 | 0.13 | 0.02 | 0.170 | 0.051 | <0.003 | 0.0011 | <0.005 | <0.005 | <0.0003 | 0.53 |
| 9 | B | Invention example | 0.14 | 0.04 | 0.14 | 0.04 | 0.183 | 0.063 | <0.003 | 0.0011 | <0.005 | <0.005 | <0.0003 | 0.60 |
| 10 | C | Invention example | 0.10 | 0.08 | 0.13 | 0.02 | 0.032 | <0.010 | 0.045 | 0.0010 | 0.016 | <0.005 | <0.0003 | 0.42 |
| 11 | C | Invention example | 0.09 | 0.08 | 0.13 | 1.12 | 0.236 | 0.258 | 0.045 | <0.0004 | 0.017 | 0.008 | 0.0027 | 1.99 |
| 12 | C | Comparative example | 0.09 | 0.03 | 0.13 | <0.01 | 0.032 | <0.010 | 0.046 | <0.0004 | 0.017 | <0.005 | <0.0003 | 0.34 |
| 13 | <u>D</u> | Comparative example* | 0.12 | 0.06 | 0.13 | 0.02 | 0.021 | 0.013 | 0.003 | 0.0013 | 0.005 | <0.005 | <0.0003 | 0.38 |

*Invention example when focusing only on arc weld metals
All element contents are mass%
Underlined values are outside scope of present invention

EP 4 470 712 A1

[Table 4]

| NO | Base steel sheet | Remarks column | Si content in base steel sheet | Residual austenite volume percentage of arc weld metal | Parameter A | Hydrogen embrittlement resistance | Electrodeposition coating properties |
|---|---|---|---|---|---|---|---|
| | | | Mass% | % | Mass% | | |
| 1 | A | Invention example | 0.65 | 5.16 | 0.0008 | A | A |
| 2 | A | Invention example | 0.65 | 8.47 | 0.0259 | B | A |
| 3 | A | Comparative example | 0.65 | 1.75 | 0.0006 | c | B |
| 4 | A | Invention example | 0.65 | 5.39 | 0.0007 | A | A |
| 5 | B | Invention example | 1.14 | 5.63 | 0.0042 | A | A |
| 6 | B | Invention example | 1.14 | 9.32 | 0.0294 | B | A |
| 7 | B | Invention example | 1.14 | 3.48 | 0.0294 | B | B |
| 8 | B | Comparative example | 1.14 | 0.84 | 0.0041 | C | B |
| 9 | B | Invention example | 1.14 | 4.37 | 0.0049 | A | B |
| 10 | c | Invention example | 1.53 | 3.24 | 0.0019 | A | A |
| 11 | C | Invention example | 1.53 | 3.11 | 0.0271 | B | A |
| 12 | C | Comparative example | 1.53 | 1.08 | 0.0018 | C | C |
| 13 | D | Comparative example* | 0.52 | 5.34 | 0.0009 | A | C |

*Invention example when focusing only on arc weld metals
Underlined values are outside scope of present invention

In No. 3, since the Mn content of the weld metal was insufficient, the amount of residual austenite was insufficient. Therefore, in No. 3, the evaluation result of hydrogen embrittlement resistance was rejected.

In No. 8, since the Si content of the weld metal was insufficient, the amount of residual austenite was insufficient. Therefore, in No. 8, the evaluation result of hydrogen embrittlement resistance was rejected.

In No. 12, since the C content of the weld metal was insufficient, the amount of residual austenite was insufficient. Therefore, in No. 12, the evaluation result of hydrogen embrittlement resistance was rejected. Further, in No. 12, the Si content was excessive. Therefore, in No. 12, an electrodeposition coating failure occurred on the surface of the weld metal, and the coating properties evaluation result was rejected.

In No. 13, the Si content of the base steel sheet was insufficient. Therefore, in No. 13, an electrodeposition coating failure occurred in the base steel sheet, and the coating properties evaluation result was rejected. However, in No. 13, no electrodeposition coating failure occurred in the weld metal. Therefore, it was judged that the weld metal of No. 13 was good in both hydrogen embrittlement resistance and coating properties.

When the parameter A was less than 0.0200%, the evaluation of cracks was particularly excellent. This is considered to be because the toughness of the weld metal was improved as the parameter A was less than 0.0200%.

On the other hand, in the present invention example in which the chemical composition of the weld metal, the residual austenite volume percentage of the weld metal, and the Si content of the base steel sheet were appropriate, all of hydrogen embrittlement resistance of the weld metal and coating properties of the base steel sheet and the weld metal were good.

(Example 2)

A welded joint was manufactured using the same base steel sheet, filler metal, and welding conditions similar to those of the invention example No. 1 disclosed in the table. However, the weld metal was rapidly cooled by immersing the welded joint in liquid nitrogen after completion of welding. As a result, the average cooling rate of the weld metal from 800°C to 300°C was 100°C/s or more and 200°C/s or less.

The amount of residual austenite in the resulting weld metal was measured to be 1.04%. That is, when the cooling rate of the weld metal was inappropriate, a required amount of residual austenite could not be secured. In addition, hydrogen embrittlement resistance of the weld metal was evaluated according to the above-described procedure and evaluation criteria, and the result was determined to be "bad".

[Brief Description of the Reference Symbols]

1 Arc weld metal (weld metal)
11 Root portion
2 Welded joint
21 Base steel sheet

**Claims**

1.   An arc weld metal comprising, in a unit mass%:

0.10% or more and 0.30% or less of C;
0.30% or more and 1.00% or less of Si;
1.30% or more and 3.00% or less of Mn;
0.0500% or less of P;
0.0100% or less of S;
0.0100% or less of N;
0.0200% or more and 0.0700% or less of O; and
5.00% or less in total of one or more kinds selected from the group of Al, Ti, Cu, Ni, Cr, Mo, V, B, Nb, Zr, and Mg,
a remainder including iron and impurities, wherein
a residual austenite volume percentage is 3.0% or more and 16.0% or less.

2.   The arc weld metal according to claim 1, comprising one or more kinds selected from the group of Al, Ti, Cu, Ni, Cr, Mo, V, B, Nb, Zr, and Mg in a total amount of 0.03% or more and 5.00% or less in a unit mass%.

3.   The arc weld metal according to claim 1, wherein

a Ni content, a Cr content, a Mo content, and a V content satisfy

$$Ni/59 + Cr/52 + Mo/96 + V/51 < 0.0200\%,$$

in which each element symbol in the above formula represents the content in mass% of each element.

4.   The arc weld metal according to claim 1 comprising

0.13% or more and 0.30% or less of C
in a unit mass%.

5.   The arc weld metal according to claim 1 comprising

0.025% or more and 0.120% or less of Ti
in a unit mass%.

6. The arc weld metal according to any one of claims 1 to 5, comprising, in a unit mass%, one or more kinds selected from the group of:

0.01% or more and 0.20% or less of Al;
0.020% or more and 0.120% or less of Ti;
0.10% or more and 1.00% or less of Cu;
0.05% or more and 1.50% or less of Ni;
0.050% or more and 1.000% or less of Cr;
0.050% or more and 1.000% or less of Mo;
0.050% or more and 0.300% or less of V;
0.050% or more and 0.0600% or less of B;
0.005% or more and 0.100% or less of Nb;
0.005% or more and 0.050% or less of Zr; and
0.0005% or more and 0.0100% or less of Mg.

7. A welded joint comprising:

a plurality of base steel sheets; and
an arc weld metal which joins the plurality of base steel sheets,
wherein
the arc weld metal is the arc weld metal according to any one of claims 1 to 5,
a Si content of each of the plurality of base steel sheets is 0.60% or more and 2.00% or less in mass%, and
a sheet thickness of at least one of the plurality of base steel sheets is 4.0 mm or less.

8. A welded joint comprising:

a plurality of base steel sheets; and
an arc weld metal which joins the plurality of base steel sheets,
wherein
the arc weld metal is the arc weld metal according to claim 6,
a Si content of each of the plurality of base steel sheets is 0.60% or more and 2.00% or less in mass%, and
a sheet thickness of at least one of the plurality of base steel sheets is 4.0 mm or less.

9. The welded joint according to claim 7, wherein at least one of the plurality of base steel sheets has a tensile strength of 980 MPa or more.

10. The welded joint according to claim 8, wherein at least one of the plurality of base steel sheets has a tensile strength of 980 MPa or more.

11. A vehicle member comprising the welded joint according to claim 7.

12. A vehicle member comprising the welded joint according to claim 8.

[Fig. 1]

[Fig. 2]

[Fig. 3]

100 μm

100 μm

[Fig. 4]

11

[Fig. 5]

21 ⌒

11 ⌒

1

2

21

[Fig. 6]

30mm

COATING FAILURE

60% OF WELD BEAD WIDTH

21

WELD BEAD WIDTH

1

60% OF WELD BEAD WIDTH

21

<div align="center">**INTERNATIONAL SEARCH REPORT**</div>

| | International application No. |
|---|---|
| | **PCT/JP2022/047289** |

**A. CLASSIFICATION OF SUBJECT MATTER**

*B23K 35/30*(2006.01)i; *C22C 38/00*(2006.01)i; *C22C 38/04*(2006.01)i
FI: B23K35/30 320A; C22C38/00 301U; C22C38/04

According to International Patent Classification (IPC) or to both national classification and IPC

**B. FIELDS SEARCHED**

Minimum documentation searched (classification system followed by classification symbols)

B23K35/30; C22C38/00; C22C38/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-001028 A (NIPPON STEEL CORP) 08 January 2004 (2004-01-08) | 1-12 |
| A | WO 2020/196869 A1 (NIPPON STEEL CORP) 01 October 2020 (2020-10-01) | 1-12 |
| A | JP 2021-183342 A (NIPPON STEEL CORP) 02 December 2021 (2021-12-02) | 1-12 |
| A | JP 2005-238305 A (NIPPON STEEL CORP) 08 September 2005 (2005-09-08) | 1-12 |
| A | JP 2007-146230 A (NIPPON STEEL CORP) 14 June 2007 (2007-06-14) | 1-12 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 March 2023** | **20 March 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/047289**

| Patent document cited in search report | | | Publication date (day/month/year) | Patent family member(s) | | | Publication date (day/month/year) |
|---|---|---|---|---|---|---|---|
| JP | 2004-001028 | A | 08 January 2004 | (Family: none) | | | |
| WO | 2020/196869 | A1 | 01 October 2020 | US | 2022/0154319 | A1 | |
| | | | | EP | 3950995 | A1 | |
| | | | | KR | 10-2021-0133279 | A | |
| | | | | CN | 113677817 | A | |
| JP | 2021-183342 | A | 02 December 2021 | (Family: none) | | | |
| JP | 2005-238305 | A | 08 September 2005 | (Family: none) | | | |
| JP | 2007-146230 | A | 14 June 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022010976 A
- WO 2013129284 A
- JP 2014133258 A
- JP 2013173179 A
- JP 2018187640 A
- JP 2005238305 A

**Non-patent literature cited in the description**

- **MITSURU TANINO et al.** Chemistry of Steel Material. Uchida Rokakuho, 2001, 103-104
- **SEISHI MAKI**. *The journal of the Japan Institute of Metals*, 1974, vol. 38, 871-876